# EUROPÄISCHE PATENTSCHRIFT

(11) **EP 2 922 890 B1**
(45) Veröffentlichungstag und Bekanntmachung des Hinweises auf die Patenterteilung: **30.08.2017**
(21) Anmeldenummer: 13798609.7
(22) Anmeldetag: 20.11.2013
(51) Int. Cl.: C08G 59/17, C08G 59/14, C08L 63/10, C04B 24/26, C04B 28/02

(54) **HARZMISCHUNG AUF EPOXY(METH)ACRYLATHARZ-BASIS UND DEREN VERWENDUNG**
RESIN MIXTURE BASED ON EPOXY(METH)ACRYLATE RESIN, AND THE USE THEREOF
MÉLANGE DE RÉSINES À BASE DE RÉSINE ÉPOXY(MÉTH)ACRYLATE ET LEUR UTILISATION

(30) Priorität: 23.11.2012 DE 102012221446
(43) Veröffentlichungstag der Anmeldung: 30.09.2015
(73) Patentinhaber: Hilti Aktiengesellschaft, 9494 Schaan (LI)
(72) Erfinder: GAEFKE, Gerald, 86159 Augsburg (DE); BÜRGEL, Thomas, 86899 Landsberg am Lech (DE); LEITNER, Michael, 86899 Landsberg (DE)
(86) Internationale Anmeldenummer: PCT/EP2013/074227
(87) Internationale Veröffentlichungsnummer: WO 2014/079854

(56) Entgegenhaltungen:
- EP-A1- 0 589 831
- EP-A1- 0 632 079
- JP-A- 2002 275 237

## Beschreibung

Die Erfindung betrifft eine Reaktionsharzmörtel enthaltend eine Harzmischung mit einem modifizierten Epoxy(meth)acrylatharz als Basisharzsowie dessen Verwendung zur chemischen Befestigung.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente, die A Komponente, die Harzmischung und die andere Komponente, die B Komponente, das Härtungsmittel enthält. Andere, übliche Bestandteile, wie organische oder anorganische Zuschlagstoffe, beispielsweise Füllstoffe, Beschleuniger, Inhibitoren, Stabilisatoren, Thixotropiermittel, Phlegmatisierungsmittel, Verdicker und Lösungsmittel einschließlich Reaktivlösungsmittel (Reaktivverdünner) und Farbstoffe, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als radikalisch härtbare Verbindungen werden häufig, insbesondere für die chemische Befestigungstechnik, Vinylesterharze und ungesättigte Polyesterharze eingesetzt. Diese enthalten bestimmte Reaktivverdünner zur Einstellung der Viskosität. Ferner ist aus der DE 10 2004 035 567 A1 bekannt, dass durch entsprechende Auswahl der Reaktivverdünner die Reaktionsharzmörtel auf einen bestimmten Untergrund optimiert werden können. Dieser Schrift kann entnommern werden, dass die Verbundtragfähigkeit in Beton bei Verwendung von Hydroxyalkyl(meth)acrylaten als Reaktivverdünner deutlich erhöht werden kann. Dementsprechend basieren derzeitige schnellhärtende Zweikomponenten Dübelmassen auf Harzmischungen, die signifikante Anteile an etwa Hydroxypropylmethacrylat (im Folgenden auch als HPMA abgekürzt) enthalten. Das HPMA, aber auch andere Hydroxyalkyl(meth)acrylate, wie Hydroxyethylmethacrylat (HEMA), sind als reizend (Xi) gekennzeichnet, so dass aufgrund der nicht unerheblichen Mengen, in welchen diese Verbindungen in den Harzmischungen enthalten sind, die Harzkomponente dieser Produkte ebenfalls als reizend (Xi) zu kennzeichnen ist. Das Weglassen dieser polaren Monomere bedingt häufig deutlich schlechtere Leistungen des Verbunddübels.

Somit müssen sich aktuell die Nutzer von Verbundmörtelsystemen zwischen am Markt befindlichen Systemen mit mittlerer Leistung in Bezug auf die Verbundtragfähigkeit aber Kennzeichnungsfreiheit und Systemen mit höherer Leistung in Bezug auf die Verbundtragfähigkeit aber mit Kennzeichnung entscheiden.

Aufgabe der Erfindung ist es, einen Reaktionsharzmörtel bereitzustellen, mit dem ohne die Verwendung der kennzeichnungspflichtigen Hydroxyalkyl(meth)acrylate eine hohe Verbundtragfähigkeit erreicht werden kann, die über den mit den derzeit am Markt befindlichen kennzeichnungsfreien Reaktionsharzmörteln liegt.

Erfindungsgemäß wird dies durch die Verwendung von Epoxy(meth)acrylatharzen erreicht, deren Hydroxylgruppen zu geringen Anteilen mit dem Anhydrid einer gesättigten C₃-C₅-Dicarbonsäure modifizierten wurden.

Zum besseren Verständnis der Erfindung werden die folgenden Erläuterungen der hierin verwendeten Terminologie als sinnvoll erachtet. Im Sinne der Erfindung bedeutet:
- *"Basisharz"* die reine, härtende bzw. härtbare Verbindung, die für sich oder mit Reaktionsmitteln, wie Härter, Beschleuniger und dergleichen (nicht im Basisharz enthalten), durch Polymerisation härtet; die härtbaren Verbindungen können Monomere, Dimere, Oligomere und Präpolymere sein;
- *"Harz-Masterbatch"* das Produkt der Herstellung des Basisharzes nach der Synthese (ohne Isolierung des Basisharzes) welches Reaktivverdünner, Stabilisatoren und Katalysatoren enthalten kann;
- *"Harzmischung"* eine Mischung aus dem Harz-Masterbatch und Beschleunigern sowie Stabilisatoren und ggf. weiteren Reaktivverdünnern; dieser Begriff wird gleichbedeutend mit dem Begriff *"organisches Bindemittel"* verwendet;
- *"Reaktionsharzmörtel"* eine Mischung aus Harzmischung und anorganischen Zuschlagstoffen; hierfür wird gleichbedeutend der Begriff "A Komponente" verwendet;
- *"Härtungsmittel"* Stoffe, welche die Polymerisation (das Härten) des Basisharzes bewirken;
- *"Härter"* eine Mischung aus Härtungsmittel und organischen und/oder anorganischen Zuschlagstoffen;
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor"* eine zur Inhibierung der Polymerisationsreaktion (Härtung) fähige Verbindung, die einmal dazu dient, die Polymerisationsreaktion und damit ein unerwünschtes vorzeitiges Polymerisieren der radikalisch polymerisierbaren Verbindung während der Lagerung zu vermeiden, wobei diese Verbindungen üblicherweise in so geringen Mengen eingesetzt werden, dass die Gelzeit nicht beeinflusst wird; andererseits dient der Polymerisationsinhibitor dazu, die Polymerisationsreaktion unmittelbar nach der Zugabe des Härtungsmittels zu verzögern, wobei die Verbindungen üblicherweise in solchen Mengen eingesetzt werden, dass die Gelzeit beeinflusst wird;
- *"Reaktivverdünner"* flüssige oder niedrigviskose Basisharze, welche andere Basisharze, den Harz-Masterbatch oder die Harzmischung verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (Mörtel) werden; auch co-polymerisierbares Monomer genannt.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Gelzeitdrift"* (für einen bestimmten ausgewählten Zeitraum, zum Beispiel 30 oder 60 Tage), bezeichnet das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes, bzw. der Reaktionsharzmasse, die beobachtete Gelzeit von der zum Zeitpunkt der Referenz abweicht;
- *"Mörtelmasse"* bezeichnet eine Formulierung, die neben der Reaktionsharzmasse weitere organische oder anorganische Füllstoffe enthält und die als solches direkt zur chemischen Befestigung verwendet werden kann;
- *"Zweikomponenten-Mörtelsystem"* wird ein System bezeichnet, dass eine A Komponente, den Reaktionsharzmörtel, und eine B Komponente, den Härter, umfasst, wobei die beiden Komponenten reaktionsinhibierend getrennt gelagert sind, so dass eine Härtung des Reaktionsharzmörtels erst nach deren Mischen erfolgt;
- *"(Meth)acryl...*/*...(meth)acryl...",* dass sowohl die "Methacryl.../...methacryl..."- als auch die "Acryl.../...acryl..."-Verbindungen umfasst sein sollen;
- *"Epoxy(meth)acrylate"* Acrylat- oder Methacrylatgruppen aufweisende, im wesentlichen Epoxygruppen-freie Derivate von Epoxidharzen;
- *"Epoxidäquivalentmasse"* diejenige Menge an Epoxidharz in [g], die ein Äquivalent [Val] Epoxidfunktionen besitzt und berechnet sich aus der Molmasse M in [g/Mol] dividiert durch die Funktionalität *f* in [Val/Mol]; (EEW [g/Val]);
- *"Carboxyäquivalentmasse"* diejenige Menge an Carboxyverbindung in [g], die ein Äquivalent [Val] Carboxyfunktion besitzt und berechnet sich aus der Molmasse *M* in [g/Mol] dividiert durch die Funktionalität *f* in [Val/mol]; (COOH-EW [g/Val]);
- *"kalthärtend",* dass die Harzmischungen und Reaktionsharzmörtel bei Raumtemperatur vollständig aushärten können.

Reaktionsharzmörtel werden in der Regel hergestellt, indem die zur Herstellung des Basisharzes erforderlichen Ausgangsverbindungen gegebenenfalls zusammen mit Katalysatoren und Lösungsmitteln, insbesondere Reaktivverdünnern, in einen Reaktor gegeben und miteinander zur Reaktion gebracht werden. Nach Beendigung der Reaktion und gegebenenfalls bereits zu Beginn der Reaktion werden zu dem Reaktionsgemisch Polymerisationsinhibitoren zur Verhinderung der vorzeitigen Polymerisation gegeben, wodurch der sogenannte Harz-Masterbatch erhalten wird. Zu dem Harz-Masterbatch werden häufig Beschleuniger für die Härtung des Basisharzes, gegebenenfalls zusätzliche Inhibitoren, die gleich oder ungleich dem Stabilisator für die Lagerstabilität sein können, zur Einstellung der Gelzeit, und gegebenenfalls weiteres Lösungsmittel, insbesondere Reaktivverdünner, gegeben, wodurch die Harzmischung erhalten wird. Diese Harzmischung wird zur Einstellung verschiedener Eigenschaften, wie der Rheologie und der Konzentration des Basisharzes, mit anorganischen Zuschlagstoffen versetzt, wodurch der Reaktionsharzmörtel erhalten wird.

Eine bevorzugte Harzmischung enthält dementsprechend mindestens ein Basisharz, mindestens einen Reaktivverdünner, mindestens einen Beschleuniger und Polymerisationsinhibitoren. Ein Reaktionsharzmörtel enthält bevorzugt neben der eben beschriebenen Harzmischung organische und/oder anorganische Zuschlagstoffe, wobei anorganische Zuschlagstoffe besonders bevorzugt sind, wie sie nachfolgend näher beschrieben werden.

Ein erster Gegenstand der Erfindung betriff einen Reaktionsharzmörtel, enthaltend eine Harzmischung mit einem modifizierten Epoxy(meth)acrylatharz als Basisharz, wobei das modifizierte Epoxy(meth)acrylatharz durch (i) Umsetzen von Epoxidgruppen aufweisenden organischen Verbindungen mit einem Zahlenmittel der Molmasse *M̅ₙ* im Bereich von 129 bis 2.400 g/Mol mit (Meth)acrylsäure und anschließendes (ii) teilweises Verestern der bei der Umsetzung gebildeten β-Hydroxylgruppen mit dem Anhydrid einer gesättigten C₃-C₅-Dicarbonsäure erhältlich ist.

Erstaunlicherweise weisen Reaktionsharzmörtel auf Basis derartiger Harzmischungen eine vergleichbare bis teilweise höhere Verbundtragfähigkeit auf als nicht modifizierte Epoxy(meth)acrylate. Aber auch gegenüber Reaktionsharzmörteln auf Basis von Epoxy(meth)acrylaten, deren Hydroxylgruppen teilweise mit ungesättigten Dicarbonsäuren, wie Maleinsäureanhydrid, modifiziert wurden, konnte teilweise eine höhere Verbundtragfähigkeit erreicht werden, obgleich die Doppelbindungsdichte pro Harzmolekül durch die Maleinsäure erhöht wird. Gemäß der DE 19956779 A1 sollten Harzsysteme mit höherer Doppelbindungsdichte pro Molekül eine höhere Temperatur- und Chemikalienbeständigkeit und somit Festigkeit aufweisen als vergleichbare Systeme mit geringerer Doppelbindungsdichte pro Molekül. Dementsprechend überraschend war, dass mit Reaktionsharzmörteln auf Basis der erfindungsgemäßen Harzmischung bessere Leistungen, inbesondere im Bezug auf die Verbundtragfähigkeit im Bereich der chemischen Befestigungstechnik erreicht werden können.

Ferner können Reaktionsharzmörtel formuliert werden, die auf die Verwendung von Hydroxyalky(meth)acrylaten, insbesondere das häufig verwendete Hydroxypropylmethacrylat als Reaktivverdünner verzichten, ohne dass sich dies negativ auf die Verbundtragfähigkeit auswirkt.

Die Epoxy(meth)acrylatharze werden durch Umsetzung einer Epoxidgruppen aufweisenden organischen Verbindung mit Acrylsäure oder Methacrylsäure erhalten, so dass die Harze notwendigerweise Acryloxygruppen oder Methacryloxygruppen an den Molekülenden und Hydroxylgruppen in 2-Position zur gebildeten Acryloxy- bzw. Methacryloxygruppe (im Folgenden auch β-Hydroxylgruppen genannt) in der Hauptkette des Moleküls aufweisen. Zweckmäßig werden pro Epoxidäquivalent 0,7 bis 1,2 Carboxyläquivalente (Meth)acrylsäure eingesetzt. Die Epoxidgruppen aufweisenden organischen Verbindungen und die (Meth)acrylsäure werden dabei bevorzugt in etwa stöchiometrischen Verhältnissen eingesetzt, d.h. pro Epoxidäquivalent der organischen Verbindung wird etwa ein Äquivalent (Meth)acrylsäure eingesetzt. Die Umsetzung erfolgt in Gegenwart geeigneter, dem Fachmann hierfür bekannter Katalysatoren, wie quartären Ammoniumsalzen.

Zweckmäßig werden als Epoxidgruppen aufweisende organische Verbindungen solche mit einem Molekulargewicht eingesetzt, das einem Zahlenmittel der Molmasse *M̅ₙ* im Bereich von 129 bis 2.400 g/Mol entspricht und die im Mittel mindestens eine, bevorzugt 1,5 bis 2 Epoxidgruppen pro Molekül enthalten. Besonders bevorzugt sind die Epoxidgruppen vom Glycidylether- oder Glycidylestertyp, die durch Umsetzen eines Epihalohydrins, insbesondere Epichlorhydrin, mit einer mono- oder multifunktionellen aliphatischen oder aromatischen Hydroxyverbindungen, Thiolverbindungen oder Carbonsäuren oder einem Gemisch davon erhalten werden. Die erhaltene Epoxidgruppen aufweisende organische Verbindung weist eine Epoxidäquivalentmasse (EEW) bevorzugt im Bereich von 87 bis 1.600 g/Val, stärker bevorzugt im Bereich von 160 bis 800 g/Val und am stärksten bevorzugt im Bereich von 300 bis 600 g/Val auf.

Beispiele geeigneter Epoxidgruppen aufweisender Verbindungen sind Polyglycidylether mehrwertiger Phenole wie beispielsweise Brenzkatechin, Resorcin, Hydrochinon, 4,4'-Dihydroxydiphenylmethan, 2,2-(4,4'-Dihydroxydiphenyl)propan (Bisphenol-A), Bis(4-hydroxyphenyl)methan (Bisphenol F), 4,4'-Dihydroxydiphenylsulfon (Bisphenol S), 4,4'-Dihydroxydiphenylcyclohexan, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), wie Phenol-Novolak-Harz, Cresol-Novolak-Harz.

Weiter können folgende beispielhaft, jedoch nicht einschränkend, genannt werden: Glycidylether von Monoalkoholen, wie beispielsweise n-Butanol oder 2-Ethylhexanol; oder Glycidylether mehrwertiger Alkohole, wie beispielsweise aus 1,3-Butandiol, 1,4-Butandiol, 1,6-Hexandiol, Glycerin, Benzylalkohol, Neopentylglykol, Ethylenglykol, Cyclohexandimethanol, Trimethylolpropan, Pentaerythrit und Polyethylenglykolen, Triglycidylisocyanurat; Polyglycidylthioether mehrwertiger Thiole, wie Bismercaptomethylbenzol; oder Glycidylester von Monocarbonsäuren, wie Versaticsäure; oder Glycidylester mehrwertiger, aromatischer und aliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Als Epoxidgruppen aufweisende organische Verbindungen sind Diglycidylether zweiwertiger Hydroxyverbindungen der allgemeinen Formel (I) besonders bevorzugt 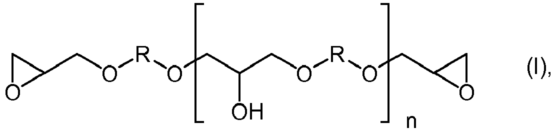 in der R eine unsubstituierte oder substituierte aliphatische oder aromatische Gruppe, bevorzugt eine aromatische Gruppe, stärker bevorzugt eine aromatische Gruppe mit 6 bis 24 Kohlenstoffatomen ist und der Mittelwert für n gleich 0 bis 3 ist. R ist besonders bevorzugt eine Gruppe vom Bisphenoltyp, wie Bisphenol A, Bisphenol F oder Bisphenol S, oder vom Novolaktyp, wobei eine Gruppe vom Bisphenoltyp ganz besonders bevorzugt ist. Der Mittelwert für n ist bevorzugt etwa 0,1, etwa 1 oder etwa 2. Dabei werden im Sinne der vorliegenden Erfindung Verbindungen, in denen n ∼ 0,1 ist, als monomer und Verbindungen, in denen n ∼ 1 oder 2 ist, als polymer bezeichnet.

Die polymeren Verbindungen haben gegenüber den monomeren Verbindungen den Vorteil, dass der Basisharzgehalt in der Harzmischung deutlich reduziert werden kann, was die Harzmischung wirtschaftlicher in der Herstellung macht, da hierdurch die Herstellungskosten reduziert werden können.

Die Herstellung der Epoxidgruppen aufweisenden organischen Verbindung kann entweder in Substanz oder in geeigneten Lösungsmitteln erfolgen, wobei als Lösungsmittel bevorzugt Reaktivverdünner verwendet werden, welche nachstehend näher erläutert werden.

Die modifizierten Epoxy(meth)acrylatharze werden erfindungsgemäß durch nur teilweise Veresterung der β-Hydroxylgruppen eines Epoxy(meth)acrylatharzes mit dem Anhydrid einer gesättigten C₃-C₅-Dicarbonsäure erhalten. Die gesättigte C₃-C₅-Dicarbonsäure ist unter Propandisäure (auch: Malonsäure), Butandisäure (auch: Bernsteinsäure) und Pentandisäure (auch: Glutarsäure) ausgewählt. Das Bernsteinsäureanhydrid ist erfindungsgemäß besonders bevorzugt.

Dabei hat bereits die Veresterung eines nur geringen Anteils der β-Hydroxylgruppen einen positiven Effekt auf die Verbundtragfähigkeit unter Standardbedingungen (+20°C) und bei erhöhten Temperaturen (+40°C). Um eine höhere Verbundtragfähigkeit bei niedrigeren Termperaturen im Bereich von -10°C zu erreichen, ist ein höherer Modifizierungsgrad erforderlich, zumindest bei Verwendung der monomeren Epoxy(meth)acrylate.

Zweckmäßig werden zur Veresterung der β-Hydroxylgruppen des Epoxy(meth)acrylatharzes 1 bis 50 Mol%, bevorzugt 2 bis 30 Mol% und stärker bevorzugt 3 bis 15 Mol% Anhydrid der gesättigten C₃-C₅-Dicarbonsäure pro β-Hydroxylgruppe des Epoxy(meth)acrylatharzes eingesetzt.

Als Basisharz kann ein modifiziertes Epoxy(meth)acrylatharz oder ein Gemisch aus Epoxy(meth)acrylatharzen verwendet werden, wobei das Gemisch aus einem Epoxy(meth)acrylatharz aber unterschiedlichen Modifizierungsgraden oder aus unterschiedlichen Epoxy(meth)acrylatharzen mit gleichem oder unterschiedlichem Modifizierungsgrad bestehen kann.

Das Basisharz, d.h. das modifizierte Epoxy(meth)acrylatharz wird in einer Menge von 20 bis 100 Gew.-%, vorzugsweise 20 bis 60 Gew.-%, bezogen auf die Harzmischung, eingesetzt, wobei die Menge unter anderem davon abhängt, ob es sich um ein monomeres oder ein polymeres Basisharz nach obiger Definition handelt.

In einer bevorzugten Ausführungsform der Erfindung enthält die Harzmischung weitere niederviskose, radikalisch co-polymerisierbare Verbindungen, bevorzugt kennzeichungsfreie Verbindungen, als Reaktivverdünner, um die Viskosität der modifizierten Epoxy(meth)acrylate bzw. der Vorstufen bei deren Herstellung anzupassen, falls erforderlich. Die Reaktivverdünner können in einer Menge von 0 bis 80 Gew.-%, vorzugsweise 40 bis 80 Gew.-%, bezogen auf die Harzmischung, zugegeben werden. Ein Teil davon kann bereits aus dem Harz-Masterbatch stammen.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: Hydroxypropyl(meth)acrylat, 1,2-Ethandioldi(meth)acrylat, 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-[5.2.1.0.^{2.6}]-decan, Dicyclopentenyloxyethylcrotonat, 3-(Meth)acryloyl-oxymethyl-tricylo-[5.2.1.0.².⁶]-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die nicht kennzeichnungspflichtigen Vertreter davon bevorzugt sind.

Zur Stabilisierung gegen vorzeitige Polymerisation kann die Harzmischung einen Polymerisationsinhibitor enthalten. Der Polymerisationsinhibitor ist bevorzugt in einer Menge von 0,0005 bis 2 Gew.-%, stärker bevorzugt 0,01 bis 1 Gew.-%, bezogen auf die Harzmischung, enthalten.

Die Harzmischung kann ferner zur Einstellung der Gelzeit und der Reaktivität zusätzlich 0,005 bis 3 Gew.-%, vorzugsweise 0,05 bis 1 Gew.-%, bezogen auf die Harzmischung, eines Polymerisationsinhibitors enthalten.

Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind.

Zur Stabilisierung gegen vorzeitige Polymerisation enthalten Harzmischungen und Reaktionsharzmörtel üblicherweise Polymerisationsinhibitoren, wie Hydrochinon, substituierte Hydrochinone, z.B. 4-Methoxyphenol, Phenothiazin, Benzochinon oder tert-Butylbrenzkatechin, wie beispielsweise in der EP 1935860 A1 oder EP 0965619 A1 beschrieben werden, stabile Nitroxylradikale, auch N-Oxyl-Radikale genannt, wie Piperidinyl-N-oxyl oder Tetrahydropyrrol-N-oxyl, wie beispielsweise in der DE 19531649 A1 beschrieben. Besonders bevorzugt wird 4-Hydroxy-2,2,6,6-tetramethylpiperidin-N-oxyl (im Folgenden als Tempol bezeichnet) zur Stabilisierung verwendet, was den Vorteil hat, dass damit auch die Gelzeit eingestellt werden kann.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert-*butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p*-cresol, Brenzkatechin und Butylbrenzkatechine, wie 4-*tert-*Butylbrenzkatechin, 4,6-Di-*tert*-butylbrenzkatechin, Hydrochinone, wie Hydrochinon, 2-Methylhydrochinon, 2-*tert-*Butylhydrochinon, 2,5-Di-*tert*-butylhydrochinon, 2,6-Di-*tert-*butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen. Ferner können in para-Position zur Hydroxylgruppe substituierte Pyrimidinol- oder Pyridinol-Verbindungen, wie sie in der nicht vorveröffentlichten Patentschrift DE 10 2011 077 248 B1 beschrieben sind, als Polymerisationsinhibitoren verwendet werden.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Bevorzugt wird die Härtung des Harzbestandteils mit einem Radikalinitiator, etwa einem Peroxid initiiert. Neben dem Radikalinitiator kann zusätzlich ein Beschleuniger verwendet werden. Hierdurch werden schnellhärtende Reaktionsharzmörtel erhalten, die kalthärtend sind. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Düsopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxylalkyl)anilin mit Dicarbonsäuren oder durch Polyaddition von Ethylenoxid and diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylate.

Sofern ein Beschleuniger verwendet wird, wird er in einer Menge von 0,01 bis 10 Gew.-%, bevorzugt 0,2 bis 5 Gew.-%, bezogen auf die Harzmischung, eingesetzt.

Erfindungsgemäß einthält der Reaktionsharzmörtel neben der eben beschriebenen Harzmischung, dem organischen Bindemittel, anorganische und/oder organische Zuschlagstoffe, wie Füllstoffe und/oder weitere Additive.

Der Anteil der Harzmischung in dem Reaktionsharzmörtel beträgt bevorzugt 10 bis 70 Gew.-%, stärker bevorzugt 30 bis 50 Gew.-%, bezogen auf den Reaktionsharzmörtel.

Dementsprechend beträgt der Anteil der Zuschlagstoffe bevorzugt 90 bis 30 Gew.-%, stärker bevorzugt 70 bis 50 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden.

Weitere mögliche Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

In einer bevorzugten Ausführungsform der Erfindung ist der erfindungsgemäße Reaktionsharzmörtel als Zwei- oder Mehrkomponenten-System, insbesondere Zweikomponenten-System konfektioniert, wobei der Harzbestandteil und der Härterbestandteil reaktionsinhibierend getrennt angeordnet sind. Dementsprechend enthält eine erste Komponente, die Komponente I (auch als A-Komponente bezeichnet), den Reaktionsharzmörtel und eine zweite Komponente, die Komponente II (auch als B-Komponente bezeichnet), den Härter. Hierdurch wird erreicht, dass die härtbaren Verbindungen und das Härtungsmittel erst unmittelbar vor der Anwendung miteinander gemischt werden und die Härtungsreaktion auslösen.

Der Härter enthält das Härtungsmittel zur Initiierung der Polymerisation (Härtung) des Harzbestandteils. Dieses ist, wie bereits erwähnt, ein Radikalinitiator, bevorzugt ein Peroxid.

Alle dem Fachmann bekannten Peroxide, die zum Härten von ungesättigten Polyesterharzen und Vinylesterharzen verwendet werden, können erfindungsgemäß zur Härtung der Epoxy(meth)acrylatharze eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können auch als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie *tert-*Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Die Peroxide werden dabei in Mengen von 0,1 bis 10 Gew.-%, bevorzugt 0,1 bis 3 Gew.% und stärker bevorzugt unter 1 Gew.-%, bezogen auf den Reaktionsharzmörtel, eingesetzt.

Bevorzugt enthält der Härter des Zweikomponenten-Mörtelsystems ferner anorganische Zuschlagstoffe, wobei die Zuschlagstoffe dieselben sind, wie sie dem Reaktionsharzmörtel zugegeben werden können sowie auch Wasser oder andere flüssige Hilfsmittel.

Die Zuschlagstoffe werden dabei in Mengen von 20 bis 90 Gew.-%, bevorzugt 50 bis 80 Gew.-%, bezogen auf die Härterkomponente eingesetzt.

Bei einer besonders bevorzugten Ausführungsform des Zweikomponenten-Mörtelsystems enthält die A-Komponente neben dem Reaktionsharzmörtel zusätzlich noch eine hydraulisch abbindende oder polykondensierbare anorganische Verbindung und die B-Komponente neben dem Härtungsmittel noch Wasser. Derartige Mörtelmassen sind ausführlich in DE 42 31 161 A1 beschrieben. Dabei enthält die A-Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-Mörtelsystem umfasst bevorzugt die A-Komponente und die B-Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Der erfindungsgemäße Reaktionsharzmörtel sowie das Zweikomponenten-Mörtelsystem finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und der gleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Die folgenden Beispiele dienen der weiteren Erläuterung der Erfindung.

### AUSFÜHRUNGSBEISPIELE

### I) Harz-Masterbatches

### A1) Synthese von monomerem Bisphenol-A-diglycidyldimethacrylat (BisGMA) (n ∼ 0,1)

220 g Bisphenol-A-diglycidylether (EEW (DIN 16945) 182-192 g/Val; Epilox® A 19-03; LEUNA-Harze GmbH), wird vollständig im Reaktor vorgelegt, mit 110 g Methacrylsäure, 0,1 g Phenothiazin sowie 2 g Tetraethylammoniumbromid versetzt und auf ca. 80 °C erwärmt.

Der Umsatz der Epoxidgruppen wird während der Reaktion durch Titration der EpoxidGruppen gemäß DIN 16945 fortlaufend ermittelt. Sobald ein Umsatz von mindestens 97% erreicht wird, kann die Reaktion abgebrochen werden.

### A2) Synthese von polymerem Bisphenol-A-diglycidyldimethacrylat (BisGMA) (n ∼ 1)

493 g Bisphenol-A-diglycidylether (EEW (DIN 16945) 300-340 g/Val; Epilox® A 32-02), wird vollständig im Reaktor vorgelegt, mit 143 g Methacrylsäure, 0,2 g Phenothiazin, 159 g Polyethylenglykol-200-dimethacrylat (PEG200DMA) sowie 5 g Tetraethylammoniumbromid versetzt und auf ca. 80 °C erwärmt.

Der Umsatz der Epoxidgruppen wird während der Reaktion durch Titration der EpoxidGruppen gemäß DIN 16945 fortlaufend ermittelt. Sobald ein Umsatz von mindestens 97% erreicht wird, kann die Reaktion abgebrochen werden.

### A3) Synthese von polymerem Bisphenol-A-diglycidyldimethacrylat (BisGMA) (n ∼ 2)

346 g Bisphenol-A-diglycidylether (EEW (DIN 16945) 450-500 g/Val; Epilox® A 50-02; LEUNA-Harze GmbH), wird vollständig im Reaktor vorgelegt, mit 68 g Methacrylsäure, 0,1 g Phenothiazin, 104 g Polyethylenglycol 200 Dimethacrylat sowie 3,2 g Tetraethylammoniumbromid versetzt und auf ca. 80 °C erwärmt.

Der Umsatz der Epoxidgruppen wird während der Reaktion durch Titration der EpoxidGruppen gemäß DIN 16945 fortlaufend ermittelt. Sobald ein Umsatz von mindestens 97% erreicht wird, kann die Reaktion abgebrochen werden.

Die Harz-Masterbatches A1 bis A3 dienen zum einen als nicht-modifizierte Harze als Vergleich und zum anderen als Ausgangsprodukte für die Modifizierung, die erfindungsgemäß mit Bernsteinsäureanhydrid (B1 bis B3) und vergleichsweise mit Maleinsäureanhydrid (C1 und C3) erfolgt.

### B1.1) und B1.2) Synthese von mit Bernsteinsäureanhydrid modifizierten monomeren BisGMA-Harzen (n ∼ 0,1)

Das Reaktionsprodukt aus A1) wird jeweils mit den in Tabelle 1 angegebenen Mengen an Bernsteinsäureanhydrid versetzt, bei 80°C gerührt und nach einer Reaktionszeit von 6 Stunden auf Raumtemperatur abgekühlt.

**Tabelle 1: verwendete Mengen an Bernsteinsäureanhydrid**

| **Harz-Masterbatch** | **B1.1** | **B1.2** |
|---|---|---|
| Mol% Bernsteinsäureanhydrid pro BisGMA (n∼0,1) | 8 | 40 |
| Mol% Bernsteinsäureanhydrid pro β-OH-Gruppe | 4 | 20 |

### B2.1) und B2.2) Synthese von mit Bernsteinsäureanhydrid modifizierten polymeren BisGMA-Harzen (n∼1)

Das Reaktionsprodukt aus A2) wird jeweils mit den in Tabelle 2 angegebenen Mengen an Bernsteinsäureanhydrid versetzt, bei 80°C gerührt und nach einer Reaktionszeit von 6 Stunden auf Raumtemperatur abgekühlt.

**Tabelle 2: verwendete Mengen an Bernsteinsäureanhydrid**

| **Harz-Masterbatch** | **B2.2** | **B2.2** |
|---|---|---|
| Mol% Bernsteinsäureanhydrid pro BisGMA (n∼1) | 7 | 30 |
| Mol% Bernsteinsäureanhydrid pro β-OH-Gruppe | 2 | 10 |

### B3.1) und B3.2) Synthese von mit Bernsteinsäureanhydrid modifizierten polymeren BisGMA-Harzen (n∼2)

Das Reaktionsprodukt aus A3) wird jeweils mit den in Tabelle 3 angegebenen Mengen an Bernsteinsäureanhydrid versetzt, bei 80°C gerührt und nach einer Reaktionszeit von 6 Stunden auf Raumtemperatur abgekühlt.

**Tabelle 3: verwendete Mengen an Bernsteinsäureanhydrid**

| **Harz-Masterbatch** | **B3.1** | **B3.2** |
|---|---|---|
| Mol% Bernsteinsäureanhydrid pro BisGMA (n∼2) | 7 | 40 |
| Mol% Bernsteinsäureanhydrid pro β-OH-Gruppe | 2 | 10 |

### C1.1) und C1.2) Synthese von mit Maleinsäureanhydrid modifizierten monomeren BisGMA-Harzen (n ∼ 0,1)

Das Reaktionsprodukt aus A1) wird jeweils mit den in Tabelle 4 angegebenen Mengen an Maleinsäureanhydrid versetzt, bei 80°C gerührt und nach einer Reaktionszeit von 6 Stunden auf Raumtemperatur abgekühlt.

**Tabelle 4: verwendete Mengen an Maleinsäureanhydrid**

| **Harz-Masterbatch** | **C1.1** | **C1.2** |
|---|---|---|
| Mol% Maleinsäureanhydrid pro BisGMA (n∼0,1) | 20 | 40 |
| Mol% Maleinsäureanhydrid pro β-OH-Gruppe | 10 | 20 |

### C3.1) Synthese von mit Maleinsäureanhydrid modifizierten Polymeren BisGMA-Harzen (n ∼ 2)

Das Reaktionsprodukt aus A3) wird mit den in Tabelle 5 angegebenen Mengen an Maleinsäureanhydrid versetzt, bei 80°C gerührt und nach einer Reaktionszeit von 6 Stunden auf Raumtemperatur abgekühlt.

**Tabelle 5: Mengen an Maleinsäureanhydrid**

| **Harz-Masterbatch** | **C3.1** |
|---|---|
| Mol% Maleinsäureanhydrid pro BisGMA (n∼2) | 7 |
| Mol% Maleinsäureanhydrid pro β-OH-Gruppe | 2 |

### II) Harzmischungen

Zur Herstellung der Harzmischungen werden die wie oben beschrieben hergestellten Harz-Masterbatches A bis C jeweils mit PEG200DMA, 1,4-Butandioldimethacrylat (BDDMA), *tert*-Butylbrenzkatechin (tBBK) und 4-Hydroxy-2,2,6,6-tetramethylpiperidin-1-oxyl (Tempol) gemischt. Die verwendeten Mengen sind in der nachfolgenden Tabelle 6 aufgelistet. Anschließend wird die Gelzeit der jeweils resultierenden Harzmischung mit einem aromatischen Amin auf ca. 6 Minuten eingestellt

**Tabelle 6: Mengen der Komponenten zur Herstellung der Harzmischungen**

| **Komponente** | **A1/B1/C1 (jeweils n ∼ 0,1)** | **A2/B2 (jeweils n ∼ 1)** | **A3 / B3 / C3 (jeweils n ∼ 2)** |
|---|---|---|---|
| | **Menge [Gew.-%]** | | |
| Harz-Masterbatch | 39,2 | 42,54 | 36,14 |
| PEG200DMA | 25,4 | 19,6 | 23,5 |
| BDDMA | 35,3 | 37,8 | 40,3 |
| tBBK | 0,05 | 0,04 | 0,04 |
| Tempol | 0,015 | 0,015 | 0,015 |

Die Bestimmung der Gelzeit erfolgt mit einer handelsüblichen Vorrichtung (GELNORM®-Gel Timer) bei einer Temperatur von 25°C. Hierzu werden jeweils die A und die B Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945, Blatt 1 und DIN 16916. Die Gelzeit ist die Zeit, bei der ein Temperaturanstieg um 10K erreicht wird, hier von 25°C nach 35°C.

### C) Reaktionsharzmörtel

Zur Herstellung der Hybridmörtel werden die Harzmischungen mit 30-45 Gewichtsanteilen Quarzsand, 15-25 Gewichtsanteilen Zement und 1-5 Gewichtsanteilen pyrogener Kieselsäure im Dissolver zu einer homogenen Mörtelmasse gemischt.

### D) Härterkomponente

Zur Herstellung der Härterkomponente werden 13 g Dibenzoylperoxid, 23 g Wasser, 1 g pyrogene Kieselsäure, 19 g Aluminiumoxid und 46 g Quarzmehl geeigneter Korngrößenverteilung im Dissolver zu einer homogenen Masse gemischt.

Die jeweiligen Reaktionsharzmörtel sowie die Härterkomponenten werden im Volumenverhältnis von 3:1 miteinander vermischt und deren Verbundtraglasten gemessen.

### Bestimmung der Versagensverbundspannungen (τ)

Zur Bestimmung der Versagensverbundspannung der ausgehärteten Masse verwendet man Ankergewindestangen M12, die in Bohrlöcher in Beton mit einem Durchmesser von 14 mm und einer Bohrlochtiefe von 72 mm mit den Reaktionsharzmörtel-Zusammensetzungen der Beispiele und Vergleichsbeispiele eingedübelt werden. Man ermittelt die mittleren Versagenslasten durch zentrisches Ausziehen der Ankergewindestangen. Es werden jeweils drei Ankergewindestangen eingedübelt und nach 24h Aushärtung ihre Lastwerte bestimmt. Die hierbei ermittelten Verbundtraglasten τ (N/mm²) sind als Mittelwert in den nachfolgenden Tabellen 7 bis 9 aufgeführt.

Verschiedene Bohrlochbedingungen und/oder Aushärtebedingungen wurden wie nachfolgend aufgelistet getestet.

| Testbedingung | Anmerkung |
|---|---|
| Referenz | gut gereinigtes, hammergebohrtes Bohrloch, Aushärtung bei Raumtemperatur (+20°C) |
| -10°C | Referenzlöcher, Setzen und Aushärten bei einer Untergrundtemperatur von -10°C |
| +40°C | Referenzlöcher, Setzen und Aushärten bei einer Untergrundtemperatur von +40°C |

**Tabelle 7: Verbundtraglasten τ monomere BisGMA-Harze (n∼0,1)**

| **n ∼ 0,1** | | **Beispiel** | | **Vergleichsbeispiel** | | |
|---|---|---|---|---|---|---|
| | | **B1.1** | **B1.2** | **A1** | **C1.1** | **C1.2** |
| Verbundtraglasten τ [N/mm²] | Ref. | 20,8±1,6 | 21,5±0,5 | 19,3±2,2 | 21,9±0,2 | 21,1±2,1 |
| | -10°C | 15±0,7 | 18,0±1,6 | 16,7±1,4 | 14,4±2,6 | 13,5±3,1 |
| | +40°C | 18,4±3,0 | 21,4±1,2 | 21,1±0,5 | 21,6±1,7 | 21,9±1,4 |

**Tabelle 8: Verbundtraglasten τ polymere BisGMA-Harze (n∼1)**

| **n∼1** | | **Beispiel** | | **Vergleichsbeispiel** |
|---|---|---|---|---|
| | | **B2.1** | **B2.2** | **A2** |
| Verbundtraglasten τ [N/mm²] | Ref. | 18,2±1,1 | 20,0±1,6 | 17,7±1,3 |
| | -10°C | 16,8±0,8 | 16,8±1,3 | 16,5±0,8 |
| | +40°C | 23,1 ±1,1 | 20,7±1,6 | 21,7±0,9 |

**Tabelle 9: Verbundtraglasten τ polymere BisGMA-Harze (n∼2)**

| **n∼2** | | **Beispiel** | | **Vergleichsbeispiel** | |
|---|---|---|---|---|---|
| | | **B3.1** | **B3.2** | **A3** | **C3.1** |
| Verbundtraglasten τ [N/mm²] | Ref. | 20,8±0,9 | 18,0±2,0 | 17,0±1,3 | 22,0±0,7 |
| | -10°C | 14,3±1,2 | 13,6±1,2 | 16,6±0,9 | 11,5±3,5 |
| | +40°C | 23,3±0,7 | 19,7±0,9 | 21,6±0,8 | 22,9±1,5 |

## Patentansprüche

1. Reaktionsharzmörtel, enthaltend eine Harzmischung mit einem modifizierten Epoxy(meth)acrylatharz als Basisharz, wobei das modifzierte Epoxy(meth)acrylatharz durch (i) Umsetzen von Epoxidgruppen aufweisenden organischen Verbindungen mit einem Zahlenmittel der Molmasse *M̅*ₙ im Bereich von 129 bis 2.400 g/Mol mit (Meth)acrylsäure und anschließendes (ii) teilweises Verestern der bei der Umsetzung gebildeten β-Hydroxylgruppen mit dem Anhydrid einer gesättigten C₃-C₅-Dicarbonsäure erhältlich ist, und anorganische und/oder organische Zuschlagstoffe.

2. Reaktionsharzmörtel nach Anspruch 1, wobei die Epoxidgruppen aufweisenden organischen Verbindungen im Mittel zwei Epoxidgruppen pro Molekül aufweisen.

3. Reaktionsharzmörtel nach Anspruch 1 oder 2, wobei die Epoxidgruppen vom Glycidylether oder Glycidylestertyp sind.

4. Reaktionsharzmörtel nach einem der vorhergehenden Ansprüche, wobei die Epoxidgruppen aufweisenden organischen Verbindungen eine Epoxyäquivalentmasse EEW im Bereich von 87 bis 1.600 g/Val aufweisen.

5. Reaktionsharzmörtel nach einem der vorhergehenden Ansprüche, wobei die Epoxidgruppen aufweisende organische Verbindungen Diglycidylether zweiwertiger Hydroxyverbindungen der allgemeinen Formel (I) sind 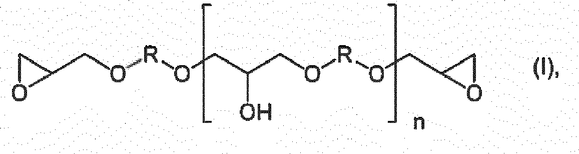 in der R eine unsubstituierte oder substituierte aliphatische oder aromatische Gruppe ist und der Mittelwert von n gleich 0 bis 3 ist.

6. Reaktionsharzmörtel nach einem der vorhergehenden Ansprüche, wobei pro Epoxidäquivalent 0,7 bis 1,2 Carboxyläquivalente (Meth)acrylsäure eingesetzt werden

7. Reaktionsharzmörtel nach mindestens einem der vorhergehenden Ansprüche, wobei zur Veresterung der β-Hydroxylgruppen 1 bis 50 mol)-% Anhydrid einer gesättigten C₃-C₅-Dicarbonsäure pro β-Hydroxylgruppe des Epoxy(meth)acrtylatharzes eingesetzt werden.

8. Reaktionsharzmörtel nach mindestens einem der vorhergehenden Ansprüche, ferner enthaltend mindestens einen zusätzlichen Bestandteil ausgewählt unter Reaktivverdünner, Polymerisationsinhibitor und/oder Beschleuniger.

9. Reaktionsharzmörtel nach einem der vorhergehenden Ansprüche, wobei die Zuschlagstoffe unter Füllstoffen und Additiven ausgewählt sind.

10. Reaktionsharzmörtel nach Anspruch 9, wobei die Harzmischung in einer Menge von 10 bis 70 Gew.-% enthalten ist und die Zuschlagstoffe in einer Menge von 90 bis 30 Gew.% enthalten sind.

11. Zweikomponenten-Reaktionsharzmörtel-System, umfassend einen Reaktionsharzmörtel nach einem der Ansprüche 1 bis 10 und einen Härter.

12. Zweikomponenten-Reaktionsharzmörtel-System nach Anspruch 11, wobei der Härter einen Radikalinitiator als Härtungsmittel und gegebenenfalls anorganische und/oder organische Zuschlagstoffe enthält.

13. Verwendung eines Reaktionsharzmörtels nach einem der Ansprüche 1 bis 10 zur chemischen Befestigung.

## Claims

1. Reaction resin mortar, containing a resin mixture with a modified epoxy(meth)acrylate resin as base resin, in which the modified epoxy(meth)acrylate resin may be obtained by (i) converting organic compounds that have epoxide groups with an average number of the molar mass *Mₙ* in the range from 129 to 2,400 g/Mol with (meth)acrylic acid and then (ii) partly esterifying the ß-hydroxyl groups formed in the conversion with the anhydride of a saturated C₃-C₅-dicarboxylic acid, and inorganic and/or organic additives.

2. Reaction resin mortar according to claim 1, in which the organic compounds that have epoxide groups have two epoxide groups per molecule on average.

3. Reaction resin mortar according to claim 1 or 2, in which the epoxide groups are of the glycidyl ether or glycidyl ester type.

4. Reaction resin mortar according to one of the previous claims, in which the organic compounds that have epoxide groups have an epoxy equivalent mass EEW in the range from 87 to 1,600 g/Val.

5. Reaction resin mortar according to one of the previous claims, in which the organic compounds that have epoxide groups are diglycidyl ethers of divalent hydroxy compounds of the general formula (I) 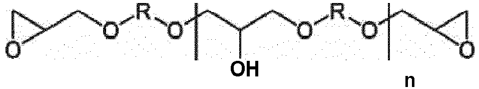 in which R is an unsubstituted or substituted aliphatic or aromatic group and the average value of n is equal to 0 to 3.

6. Reaction resin mortar according to one of the previous claims, in which 0.7 to 1.2 carboxyl equivalents of (meth)acrylic acid are used per epoxide equivalent.

7. Reaction resin mortar according to at least one of the previous claims, in which 1 to 50 mole % anhydride of a saturated C₃-C₅-dicarboxylic acid are used per ß-hydroxyl group of the epoxy(meth)acrylate resin for esterifying the ß-hydroxyl groups.

8. Reaction resin mortar according to at least one of the previous claims, also containing at least one additional component selected from reactive diluents, polymerisation inhibitors and/or accelerators.

9. Reaction resin mortar according to one of the previous claims, in which the additives are selected from fillers and additives.

10. Reaction resin mortar according to claim 9, in which the resin mixture is contained in a quantity of 10 to 70% by weight and the additives are contained in a quantity of 90 to 30% by weight.

11. Two-component reaction resin mortar system, comprising a reaction resin mortar according to one of claims 1 to 10 and a hardener.

12. Two-component reaction resin mortar system according to claim 11, in which the hardener contains a radical initiator as hardening agent and if necessary inorganic and/or organic additives.

13. Use of a reaction resin mortar according to one of claims 1 to 10 for chemical fixing.

## Revendications

1. Mortier à base de résine de réaction, contenant un mélange de résines, avec une résine d'époxy(méth)acrylate modifiée en tant que résine de base, la résine d'époxy(méth)acrylate modifiée pouvant être obtenue (i) par réaction de composés organiques présentant des groupes époxydes, ayant une masse moléculaire moyenne en nombre *M̅ₙ* comprise dans la plage de 129 à 2400 g/mol avec de l'acide (méth)acrylique, puis (ii) par estérification partielle des groupes β-hydroxyle formés lors de la réaction, avec l'anhydride d'un acide dicarboxylique saturé en C₃-C₅, et des granulats inorganiques et/ou organiques.

2. Mortier à base de résine de réaction selon la revendication 1, dans lequel les composés organiques présentant des groupes époxydes présentent en moyenne deux groupes époxydes par molécule.

3. Mortier à base de résine de réaction selon la revendication 1 ou 2, dans lequel les groupes époxydes sont du type éther glycidylique ou ester glycidylique.

4. Mortier à base de résine de réaction selon l'une des revendications précédentes, dans lequel les composés organiques présentant des groupes époxydes présentent une masse équivalente d'époxy EEW comprise dans la plage de 87 à 1600 g/val.

5. Mortier à base de résine de réaction selon l'une des revendications précédentes, dans lequel les composés organiques présentant des groupes époxydes sont des éthers diglycidyliques de composés hydroxylés divalents de formule générale (I) 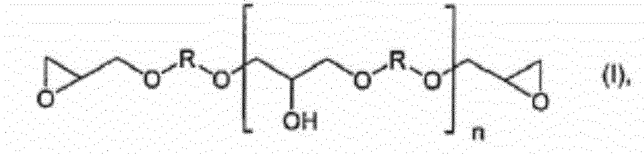 dans laquelle R est un groupe aliphatique ou aromatique, non substitué ou substitué, et la valeur moyenne de n est de 0 à 3.

6. Mortier à base de résine de réaction selon l'une des revendications précédentes, dans lequel on utilise par équivalent époxyde 0,7 à 1,2 d'acide (méth)acrylique en équivalent carboxyle.

7. Mortier à base de résine de réaction selon au moins l'une des revendications précédentes, dans lequel on utilise pour l'estérification des groupes β-hydroxyle 1 à 50 % en moles de l'anhydride d'un acide dicarboxylique saturé en C₃-C₅ par groupe β-hydroxyle de la résine d'époxyde(méth)acrylate.

8. Mortier à base de résine de réaction selon au moins l'une des revendications précédentes, contenant en outre au moins un constituant supplémentaire choisi parmi un diluant réactif, un inhibiteur de polymérisation et/ou un accélérateur.

9. Mortier à base de résine de réaction selon l'une des revendications précédentes, dans lequel les granulats sont choisis parmi les matières de charge et les additifs.

10. Mortier à base de résine de réaction selon la revendication 9, dans lequel le mélange de résines est présent en une quantité de 10 à 70 % en poids, et les granulats sont présents en une quantité de 90 à 30 % en poids.

11. Système de mortier à base de résine de réaction à deux composants, comprenant un mortier à base de résine de réaction selon l'une des revendications 1 à 10 et un durcisseur.

12. Système de mortier à base de résine de réaction à deux composants selon la revendication 11, dans lequel le durcisseur contient un amorceur radicalaire en tant qu'agent de durcissement et éventuellement des granulats inorganiques et/ou organiques.

13. Utilisation d'un mortier à base de résine de réaction selon l'une des revendications 1 à 10 pour la fixation chimique.
